# EUROPÄISCHE PATENTSCHRIFT

(11) **EP 0 825 079 B1**
(45) Veröffentlichungstag und Bekanntmachung des Hinweises auf die Patenterteilung: **20.10.1999**
(21) Anmeldenummer: 97113428.3
(22) Anmeldetag: 04.08.1997
(51) Int. Cl.: B60S 3/04

(54) **Fahrzeugwaschanlage**
Vehicle washing installation
Installation de lavage pour véhicules

(30) Priorität: 21.08.1996 DE 19633673
(43) Veröffentlichungstag der Anmeldung: 25.02.1998
(73) Patentinhaber: WESUMAT Fahrzeugwaschanlagen GmbH, D-86156 Augsburg (DE)
(72) Erfinder: Decker, Wolfgang, 86441 Zusmarshausen-Wollbach (DE)
(74) Vertreter: Liebau, Gerhard (DE)

(56) Entgegenhaltungen:
- EP-A- 0 748 729

## Beschreibung

Die Erfindung betrifft eine Fahrzeugwaschanlage, mit mindestens einer zur Bewegung der Fahrzeuge durch die Anlage vorgesehenen, endlosen Förderkette, die als Laschenkette ausgebildet ist und deren Laschen durch mit gleicher Teilung in Abstand voneinander angeordneten Kettenbolzen miteinander verbunden sind, mit mehreren entlang der Bewegungsbahn des Fahrzeuges angeordneten Behandlungsaggregaten zum Waschen oder Trocknen des Fahrzeuges, von denen mindestens eines in einer streckenweise synchron mit dem Fahrzeug vorwärts bewegbaren und mittels einer Rückstelleinrichtung in ihre Ausgangsposition zurückbewegbaren Halterung gelagert ist, und mit einer an der Halterung vorgesehenen Kupplungseinrichtung mit einem im wesentlichen quer zu den Kettenbolzenachsen und senkrecht zur Kettenlängsrichtung bewegbaren Kupplungsglied, welches zur Vorwärtsbewegung der Halterung in direktem Eingriff mit der Förderkette bringbar ist.

Eine derartige Fahrzeugwaschanlage ist in der nachveröffentlichten EP 0 748 729 A1 bzw. in der DE 38 12 476 C1 beschrieben. Da des jeweilige Behandlungsaggregat zur Vorwärtsbewegung über die Kupplungseinrichtung mechanisch mit der Förderkette verbunden ist, wird mit sehr geringem technischen Aufwand sichergestellt, daß sich die Förderkette und damit das Fahrzeug und das an die Förderkette angekuppelte jeweilige Wasch- bzw. Trockenaggregat exakt mit der gleichen Geschwindigkeit bewegen. Durch den unmittelbaren Eingriff des Kupplungsgliedes in die Förderkette ist die Kupplungseinrichtung besonders einfach im Aufbau. Zur Steuerung der Kupplungseinrichtung ist eine Lichtschranke, ein Kontakt oder dgl. vorgesehen. Sobald bestimmte Fahrzeugteile, z.B. die Stoßstange, ein Rad oder dgl. in den Bereich dieser Sensoren gelangen, wird die Kupplungseinrichtung betätigt und das Kupplungsglied in Eingriff zwischen zwei Kettenbolzen gebracht. Da jedoch die Kettenbolzen mit relativ großer Teilung von beispielsweise 125 mm, d.h. mit relativ großem Abstand voneinander angeordnet sind, kann es vorkommen, daß die Halterung und damit das von ihr getragene Behandlungsaggregat in Fürderrichtung relativ zum Fahrzeug nicht die gewünschte Position einnimmt. Ist das Behandlungsaggregat z.B. eine Trocknungsdüse, welche quer zur Förderrichtung an der Fahrzeugfront oder dem Heck entlang bewegt wird, dann ist das Trocknungsergebnis infolge einer zu großen Toleranz des Abstandes der Trocknungsdüse von dem zu trocknenden Fahrzeugbereich unbefriedigend. Ähnliches gilt z.B. auch für Radwäscher bezüglich des Waschergebnisses.

Der Erfindung liegt daher die Aufgabe zugrunde, bei Fahrzeugwaschanlagen der eingangs genannten Art die Kupplungseinrichtung so auszugestalten, daß sich bei angekuppelter Halterung das jeweilige Behandlungsaggregat gegenüber dem Fahrzeug mit geringeren Toleranzen in der vorbestimmten Position befindet.

Dies wird nach der Erfindung dadurch erreicht, daß das Kupplungsglied kammartig ausgebildet ist und mehrere in Kettenlängsrichtung in Abstand voneinander angeordnete Zinken mit dazwischen liegenden Lücken aufweist, daß die Teilung der Lücken ein ganzer Bruchteil der Teilung der Kettenbolzen ist und daß die Lückenbreite in Kettenlängsrichtung etwas größer ist als der Durchmesser der Kettenbolzen oder diese umgebende Hülsen.

Durch die kammartige Ausgestaltung des Kupplungsgliedes greift in Eingriffstellung desselben immer mindestens einer der Kettenbolzen in eine der Lücken des Kupplungsgliedes ein. Da die Teilung der Lücken nur ein Bruchteil der Teilung der Kettenbolzen ist, kommt somit das jeweilige Behandlungsaggregat der jeweils an die Förderkette angekuppelten Halterung mit wesentlich geringeren Toleranzen in die vorbestimmte Position gegenüber dem Fahrzeug. Vorteilhaft kann die Teilung der Lücken ein Viertel oder ein Drittel der Teilung der Kettenbolzen sein. Hierdurch wird die Toleranz auf ein Viertel bzw. ein Drittel der Bolzenteilung verringert. Damit sind gleichmäßig gute Trocknungs- bzw. Waschergebnisse gewährleistet.

In vorteilhafter Ausgestaltung der Erfindung sollte die Länge des Kupplungsgliedes so groß sein, daß in Eingriffstellung mindestens zwei Kettenbolzen an seinen Zinken anliegen. Hierdurch wird eine gute Kraftübertragung zwischen Förderkette und Halterung bei geringem Verschleiß gewährleistet.

Die Erfindung ist in folgendem, anhand eines in der Zeichnung dargestellten Ausführungsbeispieles näher erläutert. Es zeigen:
- Figur 1: eine Draufsicht auf die erfindungsgemäße Vorrichtung am Beispiel eines Trocknungsaggregates,
- Figur 2: eine Teil-Stirnansicht in Richtung II der Figur 1,
- Figur 3 und 4: Seitenansichten des Kupplungsgliedes in verschiedenen Eingriffsstellungen mit der Förderkette.

Bei Fahrzeugwaschanlagen der hier beschriebenen Art, sogenannten Waschstraßen, werden die zu waschenden Fahrzeuge durch eine Fördereinrichtung durch die Anlage bewegt. Diese Fördereinrichtung besteht in der Regel aus zwei zueinander parallelen endlosen Förderketten 1, 1', zwischen denen in gewissen Abständen Mitnehmerrollen 12 angeordnet sind. Diese Mitnehmerrollen legen sich jeweils von hinten an eines der Räder des zu waschenden bzw. zu trocknenden Fahrzeuges und schieben so das Fahrzeug durch die Waschanlage. Es gibt auch Fürdereinrichtungen mit nur einer endlosen Förderkette, an der die Mitnehmerrollen dann fliegend angeordnet sind. Die Richtung, in der das zu waschende Fahrzeug mittels der Förderketten 1, 1' bewegt wird, ist mit F bezeichnet.

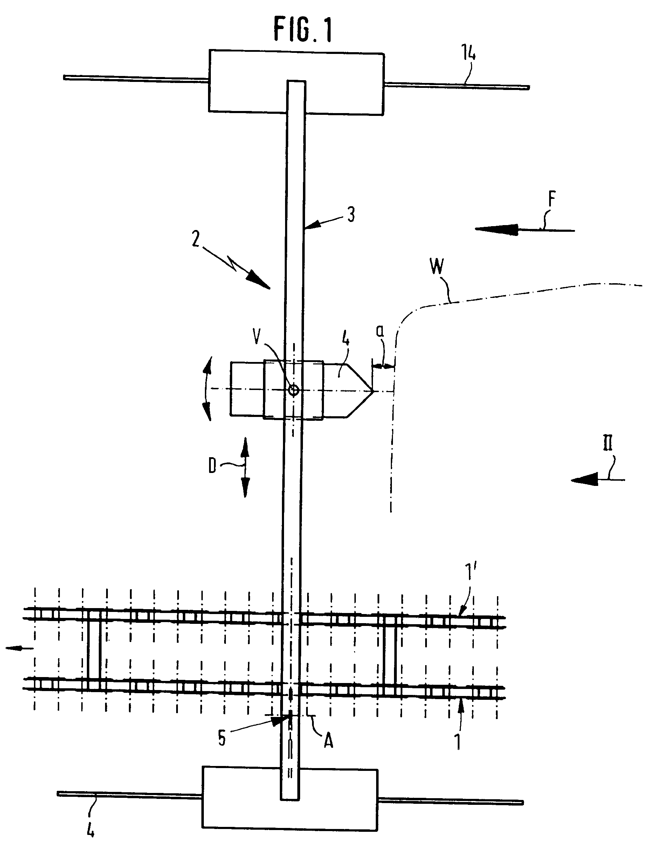

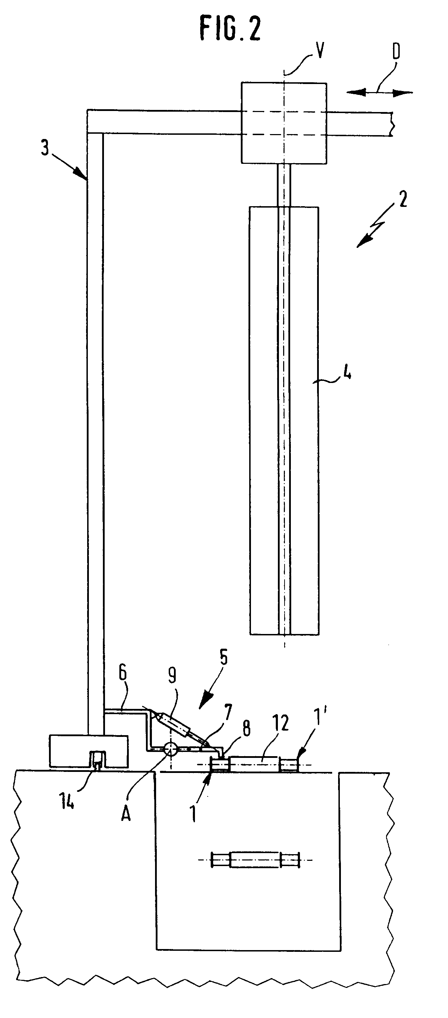

Entlang der Bewegungsbahn des Fahrzeuges können mehrere Behandlungsaggregate zum Waschen und Trocknen des Fahrzeuges angeordnet sein, von denen einige streckenweise synchron mit dem Fahrzeug in dessen Bewegungsrichtung F bewegt werden sollen. Am Beispiel eines in Figur 1 und 2 dargestellten Trocknungsaggregates 2 ist die Erfindung näher beschrieben. Die beweglichen Behandlungsaggregate sind jeweils in einer Halterung angeordnet, die in Bewegungsrichtung F des Fahrzeuges vorwärts bewegbar und nach Beendigung des Wasch- oder Trocknungsvorganges durch eine nicht dargestellte Rückstelleinrichtung, wie z.B. Gegengewichte, Federn, Pneumatikzylinder oder dgl. wieder in ihre Ausgangsposition zurückbewegbar sind. Unter Halterung wird hier jede Art von Vorrichtung verstanden, die zur beweglichen Lagerung des betreffenden Behandlungsaggregates geeignet ist, wie z.B. ein Schlitten, ein Portal, ein Rahmen, ein Schwenkarm oder dgl..

Bei dem in Figur 1 und 2 dargestellten Trocknungsaggregat 2 ist ein Portal 3 vorgesehen, welches auf Schienen 14in Förderrichtung F vorwärts bewegbar und entgegen der Pfeilrichtung F zurückbewegbar ist. An dem Portal 3 ist mindestens eine vertikale Trocknungsdüse 4 in Richtung D quer zur Förderrichtung F verschiebbar gelagert. Die Trocknungsdüse 4 kann auch um eine vertikale Achse V schwenkbar gelagert sein.

Um die Halterung bzw. das Portal 3 des Trocknungsaggregates synchron mit dem Fahrzeug vorwärts bewegen zu können, ist eine Kupplungseinrichtung 5 vorgesehen. Diese Kupplungseinrichtung 5 ist an einem Mitnehmerarm 6 des Portals 3 angebracht. Sie weist einen um eine sich in Förderrichtung F erstreckende Achse A schwenkbaren Kupplungsarm 7 auf, der ein Kupplungsglied 8 trägt. Zur Bewegung des Kupplungsarmes 7 ist ein Pneumatikzylinder 9 oder dgl. vorgesehen.

Die Förderketten 1, 1' sind als Laschenketten ausgebildet. Da das Kupplungsglied 8 nur mit der außen liegenden Förderkette 1 zusammenarbeitet, wird in folgendem nur noch auf diese Förderkette Bezug genommen. Die Laschen 1a dieser Förderkette sind in bekannter Weise durch Kettenbolzen 10, die sich quer zur Kettenlängsrichtung L erstrecken, untereinander verbunden. Die Kettenbolzen 10 können, was in der Zeichnung nicht dargestellt ist, auch noch von Hülsen (Hülsenkette) umgeben sein. Die Kettenbolzen 10 weisen einen Durchmesser von etwa 25 mm auf. Sofern sie von einer Hülse umgeben sind, ist bei den folgenden Ausführungen unter dem Durchmesser d auch der Hülsendurchmesser zu verstehen, d.h. der Durchmesser desjenigen Teiles, an welchem das Kupplungsglied 8 angreift. Die Kettenbolzen 10 sind mit gleichen Achsabständen, d.h. mit gleicher Teilung t, von etwa 125 mm angeordnet.

Das Kupplungsglied 8 ist kammartig ausgebildet und weist mehrere, in Kettenlängsrichtung L in Abstand voneinander angeordnete Zinken 8a mit dazwischen liegenden Lücken 8b auf. Die Zinken 8a und Lücken 8b sind durch entsprechende Ausnehmungen im Kupplungsglied 8 gebildet. Die Mittenabstände, d.h. die Teilung t1 der Lücken 8b, ist ein ganzer Bruchteil der Teilung t der Kettenbolzen 10, vorzugsweise ein Viertel oder, wie es in der Zeichnung dargestellt ist, ein Drittel der Teilung t. Beim gezeigten Ausführungsbeispiel beträgt also die Teilung t1 etwa 42 mm. Je kleiner die Teilung t1 ist, desto größer ist die Positioniergenauigkeit des Behandlungsaggregates. Jedoch kann man die Teilung t1 der Lücken 8b nicht beliebig klein machen, da sonst die Breite der zwischen den Lücken verbleibenden Zinken 8a für die Kraftübertragung zu gering wäre. Die Breite b der Lücken 8b muß geringfügig größer sein als der Durchmesser d des Kettenbolzens 10 bzw. einer den Kettenbolzen umgebenden Hülse, sofern es sich um eine Hülsenkette handelt. Die Breite b muß so gewählt werden, daß der Kettenbolzen 10 bzw. die Hülse leicht in die jeweilige Lücke 8b des Kupplungsgliedes 8 eintreten kann.

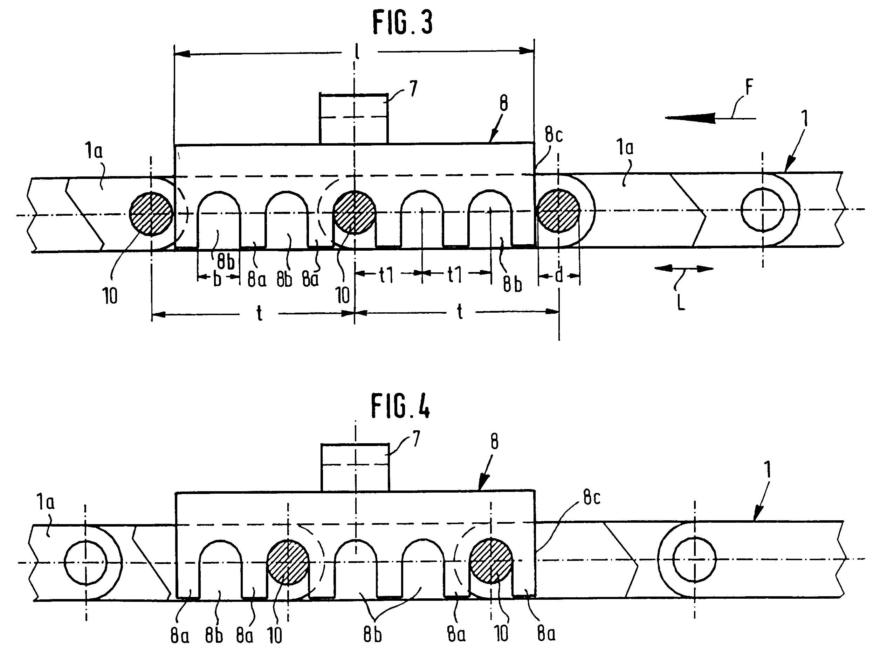

Zweckmäßig ist die Länge des Kupplungsgliedes 8 so groß, daß in Eingriffstellung, wie es in Figur 3 und 4 gezeigt ist, mindestens zwei Kettenbolzen 10 an den Zinken 8a des Kupplungsgliedes 8 anliegen. Hierdurch erfolgt die Übertragung der Schubkraft von der Förderkette 1 auf das Kupplungsglied 8 immer über zwei Kettenbolzen 10. Wenn letzteres der Fall sein soll, dann genügt es, wenn die Länge l des Kupplungsgliedes 8 geringfügig kleiner ist als der lichte Abstand zwischen einem Kettenbolzen 10 und dem übernächsten, was aus Figur 3 erkennbar ist.

Wenn ein durch die Förderketten 1, 1' in Richtung F bewegtes Fahrzeug W in die Nähe des Trocknungsaggregates 2 gelangt, wird über eine nicht dargestellte Lichtschranke, einen Kontakt oder dgl., der Druckluftzylinder 9 so gesteuert, daß er den Kupplungsarm 7 nach unten in Richtung auf die Förderkette 1 zu drückt. Hierdurch gelangt das Kupplungsglied 8 in den Bereich zwischen den Kettenlaschen 1a und es tritt, wie es beispielsweise in Figur 3 gezeigt ist, einer der Kettenbolzen 10 in die mittlere Lücke 8b des Kupplungsgliedes 8 ein. Durch diesen Kettenbolzen 10 und den an der rechten Stirnseite 8c des Kupplungsgliedes 8 anliegenden Kettenbolzen 10, wird Kraft von der Förderkette 1 auf das Kupplungsglied 8 und über den Kupplungsarm 7 und den Mitnehmerarm 6 auf das Portal 3 übertragen. Dieses wird nunmehr mit derselben Geschwindigkeit, mit der die Förderkette 1 das Fahrzeug W schiebt, in Förderrichtung F synchron mit dem Fahrzeug nach links bewegt und die Trocknungsdüse 4 wird hierdurch in einem konstanten vorbestimmten Abstand a von einem bestimmten Fahrzeugteil, beispielsweise der Stoßstange, gehalten. Während das Portal 3 synchron mit dem Fahrzeug W bewegt wird, wird die Trocknungsdüse 4 am Portal 3 quer zur Förderrichtung F in Richtung D verschoben. Es kann an dem Portal 3 zweckmäßig noch eine zweite, gleichartige Trocknungsdüse angeordnet sein, die in entgegengesetzter Richtung bewegt wird wie die gezeigte Trocknungsdüse 4. Ausgehend von einer Mittelstellung am Portal werden die beiden Trocknungsdüsen entgegengesetzt zueinander nach außen bewegt und trocknen dabei die Frontpartie des Fahrzeuges. Sobald sie genügend weit nach außen bewegt wurden, werden sie um 90° nach innen geschwenkt, so daß ihre Austrittsschlitze nunmehr zu den Seitenflächen des Fahrzeuges W gerichtet sind. Über einen am Portal angeordneten, nicht dargestellten Endschalter wird, sobald die Trocknungsdüsen 4 in ihre äußere Endstellung gelangt sind, der Pneumatikzylinder 9 so gesteuert, daß er den Kupplungsarm nach oben schwenkt, wodurch das Kupplungsglied 8 aus der Förderkette 1 heraustritt und damit das Portal 3 wieder von der Förderkette gelöst wird. Durch die nicht dargestellte Rückstelleinrichtung wird das Portal 3 langsam in seine Ausgangsstellung entgegen der Pfeilrichtung F zurückbewegt, während das Fahrzeug gleichzeitig durch die Förderketten 1, 1' in Richtung F weitergefördert wird.Hierdurch entsteht eine Relativbewegung zwischen den Trocknungsdüsen 4 und dem Fahrzeug W und es werden die Seitenflächen desselben getrocknet. Wenn das Heck des Fahrzeuges sich genügend weit vom Trocknungsaggregat 2 entfernt hat, wird über eine Lichtschranke oder einen anderen Sensor erneut der Pneumatikzylinder 9 der Kupplungseinrichtung 5 gesteuert und das Kupplungsglied 8 nach unten bewegt. Je nachdem welche Stellung die Förderkette 1 gerade einnimmt, können nunmehr, wie es in Figur 4 gezeigt ist, zwei Kettenbolzen 10 in die zweite und in die letzte Lücke 8b des Kupplungsgliedes 8 eintreten. Da die Lücken 8b mit einer Teilung t1 von 42 mm angeordnet sind, kann der Abstand a der Trocknungsdüsen 4 von der Fahrzeugfront bzw. dem Fahrzeugheck maximal um 42 mm kleiner oder größer sein, was jedoch immer noch einen hervorragenden Trocknungseffekt gewährleistet. Vor der Trocknung des Hecks werden die Trocknungsdüsen 4 wiederum um 90° weitergeschwenkt, so daß sie entgegengesetzt zu der in Figur 1 dargestellten Stellung nunmehr auf das Fahrzeugheck gerichtet sind. Bei der Trocknung des Fahrzeughecks werden die Trocknungsdüsen aufeinander zu von außen nach innen bewegt. Nachdem die Trocknung des Fahrzeughecks beendet ist, wird die Kupplungseinrichtung wieder gelöst und das Trocknungsaggregat 2 kann unter Wirkung der Rückstelleinrichtung wieder in seine Ausgangsstellung zurückkehren. Es ist natürlich auch möglich, das Trocknungsaggregat so auszugestalten, daß mit dem mitfahrenden Trocknungsaggregat jeweils nur die Fahrzeugfront und das Fahrzeugheck getrocknet werden, während die Trocknung der Seitenflächen durch stationäre Trocknungsdüsen erfolgt.

Wenn das neuartige Kupplungsglied zum Ankuppeln eines Waschaggregates, z.B. eines Radwäschers, an die Förderkette verwendet wird, dann sorgt die feinere Teilung t1 der Lücken 8b bei dem Radwäscher dafür, daß die Bürstenachse der rotierenden Waschbürste in größtmöglicher Nähe der Achse des zu waschenden Rades liegt.

Wenn bei Betätigung des Pneumatikzylinders 9 die Lücken 8b des Kupplungsgliedes 8 nicht genau mit dem Kettenbolzen 10 fluchten, dann spielt dies keine Rolle. In letzterem Fall treffen die Unterseiten von einem oder zwei Zinken 8a auf einen oder zwei der Kettenbolzen 10, die sich zusammen mit der Förderkette 1 langsam weiterbewegen. Hierdurch gelangen die Kettenbolzen 10 in eine Stellung, in der sie mit einer oder zwei der Lücken 8b fluchten, so daß dann das Kupplungsglied 8 in Eingriff mit dem Kettenbolzen 10 gelangen kann.

## Patentansprüche

1. Fahrzeugwaschanlage, mit mindestens einer zur Bewegung der Fahrzeuge (W) durch die Anlage vorgesehenen, endlosen Förderkette (1, 1'), die als Laschenkette ausgebildet ist und deren Laschen (1a) durch mit gleicher Teilung (t) in Abstand voneinander angeordneten Kettenbolzen (10) miteinander verbunden sind, mit mehreren entlang der Bewegungsbahn des Fahrzeuges angeordneten Behandlungsaggregaten zum Waschen oder Trocknen des Fahrzeuges (W), von denen mindestens eines in einer streckenweise synchron mit dem Fahrzeug (W) vorwärts bewegbaren und mittels einer Rückstelleinrichtung in ihre Ausgangsposition zurückbewegbaren Halterung gelagert ist, und mit einer an der Halterung vorgesehenen Kupplungseinrichtung (5) mit einem im wesentlichen quer zu den Kettenbolzenachsen und senkrecht zur Kettenlängsrichtung bewegbaren Kupplungsglied (8), welches zur Vorwärtsbewegung der Halterung in direktem Eingriff mit der Förderkette (1, 1') bringbar ist, **dadurch gekennzeichnet**, daß das Kupplungsglied (8) kammartig ausgebildet ist und mehrere in Kettenlängsrichtung (L) in Abstand (b) voneinander angeordnete Zinken (8a) mit dazwischen liegenden Lücken (8b) aufweist, daß die Teilung (t1) der Lücken (8b) ein ganzer Bruchteil der Teilung (t) der Kettenbolzen (10) ist und daß die Lückenbreite (b) in Kettenlängsrichtung (L) etwas größer ist als der Durchmesser (d) der Kettenbolzen (10) oder diese umgebende Hülsen.

2. Fahrzeugwaschanlage nach Anspruch 1, **dadurch gekennzeichnet**, daß die Teilung (t1) der Lücken (8b) ein Viertel oder ein Drittel der Teilung (t) der Kettenbolzen (10) ist.

3. Fahrzeugwaschanlage nach Anspruch 1 oder 2, **dadurch gekennzeichnet**, daß die Länge (l) des Kupplungsgliedes (8) so groß ist, daß in Eingriffsstellung mindestens zwei Kettenbolzen (10) an seinen Zinken (8a) anliegen.

4. Fahrzeugwaschanlage nach Anspruch 3, **dadurch gekennzeichnet**, daß die Länge (l) des Kupplungsgliedes (8) geringfügig kleiner ist als der lichte Abstand zwischen einem Kettenbolzen (10) und dem übernächsten Kettenbolzen (10).

## Claims

1. A vehicle washing installation with at least one endless conveyor chain (1, 1') provided for moving the vehicle (W) through the installation and which is in the form of a sprocket chain and whose side plates (1a) are connected together by chain studs (10) arranged at equal distances (t) from one another, a plurality of treatment units arranged along the path of movement of the vehicle for washing or drying the vehicle (W), of which at least one is mounted in a carrier adapted to move forwards synchronously with the vehicle (W) over a path section and to be moved back to its starting position by means of a restoring device, and a coupling device (5) provided on the carrier, with a coupling member (8) movable transverse to the chain stud axes and perpendicular to the longitudinal direction of the chain, which can be brought into direct engagement with the conveyor chain (1, 1') for the forward movement of the carrier, characterized in that the coupling member (8) is of comb-like form and comprises a plurality of teeth (8a) arranged at a distance (b) from one another by in the longitudinal direction of the chain (L), with gaps (8b) therebetween, in that the pitch (t1) of the gaps (8b) is an integral fraction of the pitch (t) of the chain studs (10) and in that the gap width (b) in the longitudinal direction of the chain (L) is somewhat greater than the diameter (d) of the chain studs (10) or sleeves surrounding these.

2. A vehicle washing installation according to claim 1, characterized in that the pitch (t1) of the gaps (8b) is a quarter or a third of the pitch (t) of the chain studs (10).

3. A vehicle washing installation according to claim 1 or 2, characterized in that the length (l) of the coupling member (8) is sufficiently large for at least two chain studs (10) to engaged with its teeth (8a) in the engaged position.

4. A vehicle washing installation according to claim 3, characterized in that the length (l) of the coupling member (8) is slightly smaller than the clear distance between one chain stud (10) and the next chain stud (10) but one.

## Revendications

1. Installation de lavage de véhicules, comprenant au moins une chaîne transporteuse sans fin (1, 1'), prévue pour déplacer les véhicules (W) à travers l'installation, qui est réalisée sous forme de chaîne articulée et dont les maillons (1a) sont mutuellement reliés par des tourillons de chaîne (10) disposés à distance les uns des autres avec le même pas (t), comprenant plusieurs équipements de traitement disposés le long de la voie de déplacement du véhicule et destinés à laver ou sécher le véhicule (W), parmi lesquels au moins un est monté dans un support pouvant être déplacé vers l'avant sur une certaine distance en synchronisme avec le véhicule (W) et pouvant être ramené dans sa position initiale au moyen d'un dispositif de rappel, et comprenant un dispositif d'accouplement (5), prévu sur le support et pourvu d'un organe d'accouplement (8) pouvant être déplacé essentiellement transversalement aux axes des tourillons de chaîne et perpendiculairement à la direction longitudinale de la chaîne, organe qui, afin de déplacer le support vers l'avant, peut être amené en engagement direct avec la chaîne transporteuse (1, 1'), **caractérisée** en ce que l'organe d'accouplement (8) est réalisé à la manière d'un peigne et présente plusieurs dents (8a) disposées à distance (b) les unes des autres dans la direction longitudinale (L) de la chaîne, avec des entredents (8b) entre elles, en ce que le pas (t1) des entredents (8b) est une fraction entière du pas (t) des tourillons de chaîne (10), et en ce que la largeur (b) des entredents dans la direction longitudinale (L) de la chaîne est légèrement supérieure au diamètre (d) des tourillons de chaîne (10) ou des douilles qui les entourent.

2. Installation de lavage de véhicules selon la revendication 1, **caractérisée** en ce que le pas (t1) des entredents (8b) est égal à un quart ou un tiers du pas (t) des tourillons de chaîne (10).

3. Installation de lavage de véhicules selon la revendication 1 ou 2, **caractérisée** en ce que la longueur (l) de l'organe d'accouplement (8) est suffisante pour que, dans la position d'engagement, au moins deux tourillons de chaîne (10) s'appliquent contre ses dents (8a).

4. Installation de lavage de véhicules selon la revendication 3, **caractérisée** en ce que la longueur (l) de l'organe d'accouplement (8) est légèrement inférieure à l'écartement entre un tourillon de chaîne (10) et le second tourillon de chaîne (10) suivant.
